# DEMANDE DE BREVET EUROPEEN

(11) **EP 2 226 140 A1**
(43) Date de publication de la demande: **08.09.2010**
(21) Numéro de dépôt: 09153150.9
(22) Date de dépôt: 18.02.2009
(51) Int. Cl.: B22D 41/38

(54) **Dispositif d'entraînement d'une valve de régulation pour la coulée de métal liquide**

(71) Demandeur: Vesuvius Group S.A, 7011 Ghlin (BE)
(72) Inventeur: La désignation de l'inventeur n'a pas encore été déposée
(74) Mandataire: Debled, Thierry

(57) **Abrégé**

L'invention concerne un dispositif d'entraînement (10) d'une valve de régulation pour la coulée de métal liquide, comprenant une tige principale (16) de commande de l'ouverture et de la fermeture de la valve, et des moyens (40) de couplage de la tige principale (16) à la valve. Le dispositif comporte en outre des moyens (62, 64) de commande des moyens de couplage (40), aptes à activer et désactiver les moyens de couplage.

## Description

La présente invention concerne le domaine technique de la coulée continue de métal liquide, par exemple d'acier liquide.

Dans une installation de coulée de métal liquide, on transfère généralement le métal liquide depuis une poche de coulée vers un répartiteur, destiné à répartir le métal liquide dans des moules de coulée. Pour transférer le liquide depuis la poche vers le répartiteur, on utilise généralement une valve de régulation, disposée au fond de la poche de coulée. Cette valve de régulation, dite "valve à tiroirs", est généralement composée de deux plaques superposées, coulissant l'une par rapport à l'autre de façon que la valve puisse prendre une configuration fermée, pendant laquelle la poche de coulée peut être déplacée, et une configuration ouverte, laissant passer du liquide pour son transfert dans le répartiteur. Pour assurer l'ouverture et la fermeture de la valve de régulation, on utilise un dispositif d'entraînement de la valve, rapporté sur la poche de coulée ou sur la valve, au moment où la poche arrive à proximité du répartiteur.

Un exemple de dispositif d'entraînement est décrit dans le document US 6 045 015. Ce dispositif d'entraînement comprend un vérin hydraulique, muni d'un cylindre fixé temporairement sur la valve. L'extrémité de la tige du vérin est par ailleurs couplée à l'une des plaques de la valve, pour l'ouvrir ou la fermer. A cet effet, l'extrémité de la tige comprend une mâchoire de couplage, dans laquelle s'encliquette une extrémité de la partie mobile de la valve contenant la plaque mobile.

Ainsi, pour monter le dispositif d'entraînement sur la valve, on rapporte tout d'abord le cylindre du vérin sur la valve, puis on couple la tige de vérin et la plaque par déplacement de la tige de vérin dans une direction, appelée dans la suite direction longitudinale. Plus tard, au terme des opérations de coulée, pour démonter le dispositif d'entraînement de la valve, on retire l'extrémité de la plaque mobile de la mâchoire en effectuant un glissement de tout le dispositif d'entraînement (donc de la mâchoire) dans une direction transversale, perpendiculaire à la direction longitudinale. Aussi, comme on doit démonter le dispositif d'entraînement par déplacement dans la direction transversale, il est nécessaire de prévoir un espace suffisant sous la poche de coulée pour sa mise en oeuvre.

Or, la partie inférieure d'une poche de coulée est généralement très encombrée, par exemple par des renforts, des pieds de la poche, des agencements pour l'injection de bulles dans le fond de la poche, des canalisations, etc. II en résulte que l'étape de démontage du dispositif d'entraînement pose des difficultés.

La présente invention a notamment pour but de proposer un dispositif d'entraînement dont le montage et le démontage est plus simple à mettre en oeuvre.

A cet effet, l'invention a pour objet un dispositif d'entraînement d'une valve de régulation pour la coulée de métal liquide, comprenant une tige principale de commande de l'ouverture et de la fermeture de la valve, et des moyens de couplage de la tige principale à la valve, **caractérisé en ce qu**'il comporte en outre des moyens de commande des moyens de couplage, aptes à activer et désactiver les moyens de couplage.

Ainsi, plutôt que d'avoir à déplacer le dispositif d'entraînement dans la direction transversale pour le découpler de la valve, on propose d'effectuer tout d'abord une étape de désactivation des moyens de couplage, en leur faisant reprendre leur configuration initiale, puis de procéder au démontage du dispositif d'entraînement. Ce démontage est ainsi simplifié, puisqu'il n'est plus nécessaire de prévoir un déplacement transversal, en plus du mouvement longitudinal effectué pour le couplage, pour le démontage spécifique des moyens de couplage. En conséquence, il n'est plus nécessaire de libérer un espace aussi grand qu'auparavant sous la poche de coulée.

Par ailleurs, comme on commande la désactivation des moyens de couplage, cette opération peut être faite à distance, si bien qu'une intervention humaine n'est pas forcément nécessaire pour le démontage des moyens de couplage. Ceci simplifie les opérations puisqu'une intervention humaine est généralement délicate à mettre en oeuvre du fait de la chaleur conséquente de la partie inférieure de la poche après la coulée. En outre, la commande de l'activation et de la désactivation offre la possibilité d'automatiser complètement le couplage et le découplage du dispositif d'entraînement avec la valve de régulation. En particulier, il peut être difficile d'automatiser complètement ce couplage et ce découplage lorsque les déplacements doivent suivre à la fois une direction longitudinale et une direction transversale.

On notera également que les moyens de commande proposés permettent de contrôler plus facilement l'ouverture et la fermeture de la valve. En effet, lorsque la valve n'est pas couplée à un dispositif d'entraînement, il existe un risque d'ouverture accidentelle de la valve, par exemple à la suite d'un choc au cours du déplacement de la poche de coulée. Or, une ouverture accidentelle en cours de déplacement peut causer des dégâts considérables lorsque la poche de coulée est remplie de métal liquide, très chaud. Pour réduire ce risque, il est connu dans l'état de la technique de munir la valve d'un système de verrouillage de la valve en position fermée. II convient alors de déverrouiller la valve avant d'entamer les opérations de coulée. Selon l'invention, ce déverrouillage peut avantageusement être activé par les moyens de commande des moyens de couplage au moment du couplage à la valve.

Le dispositif d'entraînement peut en outre comporter l'une ou plusieurs des caractéristiques suivantes.
- Les moyens de commande des moyens de couplage comprennent un piston de couplage relié à une tige de couplage, l'extrémité de la tige de couplage étant apte à activer et désactiver les moyens de couplage par coulissement du piston et de la tige de couplage.
- La tige de couplage est montée coulissante à l'intérieur de la tige principale. Outre le fait que l'on peut ainsi éventuellement optimiser le nombre de connexions hydrauliques du dispositif d'entraînement, le fait de prévoir la tige de couplage dans la tige principale permet de diminuer l'encombrement du dispositif d'entraînement.
- Les moyens de couplage comprennent au moins un plot rapporté sur la tige principale, monté mobile par rapport à la tige principale entre une position activée, dans laquelle le plot s'étend transversalement à la tige principale en faisant saillie de cette tige de façon à pouvoir coupler la tige principale et la valve, et une position désactivée, dans laquelle le plot est au moins partiellement rétracté dans la tige principale, de façon à pouvoir découpler la tige principale et la valve. Ainsi, lorsque le plot est en position activée, la saillie réalisée sur la tige principale peut permettre un ancrage de cette tige dans un logement correspondant de la valve de régulation.
- L'extrémité de la tige principale est destinée à être reçue dans un logement de la valve, le plot comprenant une surface de butée agencée pour retenir cette extrémité dans le logement lorsque le plot est en position activée. En d'autres termes, le plot, en position activée, assure une fonction d'ancrage de l'extrémité de la tige principale dans le logement de la valve. Grâce à cet ancrage, tout déplacement de la tige principale génère un déplacement similaire du logement de la valve, donc de l'une des plaques de la valve de régulation, pour son ouverture ou sa fermeture:

- Le dispositif d'entraînement comporte des moyens de rappel des moyens de couplage dans leur configuration désactivée. On peut par exemple prévoir un bras d'entraînement des moyens de couplage, pouvant être actionné par un ressort, ou encore par la tige de couplage.
- Le dispositif d'entraînement comprend un cylindre destiné à être reçu dans un logement solidaire de la valve, le dispositif comprenant un piston, dit piston principal, relié à la tige principale, et comportant un autre piston, dit piston de fixation, agencé pour assurer la fixation du cylindre relativement au logement. On notera que le logement du cylindre peut être prévu directement sur la valve de régulation, ou bien sur la poche de coulée sur laquelle est montée la valve de régulation. Ce mode de réalisation est particulièrement intéressant pour faciliter le montage du cylindre dans le logement. En effet, pour fixer le cylindre dans le logement, on doit généralement l'encastrer dans le logement, en diminuant le plus possible les jeux entre le cylindre et le logement pour éviter les pertes de charge. Du fait de cet encastrement serré, le montage du cylindre dans le logement peut être relativement difficile à mettre en oeuvre, particulièrement par un robot. En prévoyant un second piston assurant la fixation du cylindre sur la valve, on peut fixer le cylindre quelle que soit la taille du logement dans lequel il est reçu. En effet, grâce au piston de fixation, on peut ajuster la taille du cylindre une fois ce dernier rapporté dans le logement, de façon à supprimer ou diminuer les jeux. En d'autres termes, selon une première étape, on peut introduire le cylindre dans le logement, en autorisant la présence d'un jeu, et selon une seconde étape, compenser le jeu, par déplacement du piston de fixation, afin de faire disparaître ce jeu. En faisant disparaître ce jeu, on évite une perte de charge lors de la course du piston principal, tout en autorisant l'automatisation du montage du cylindre sur la valve.
- Le dispositif comprend une chambre hydraulique délimitée, d'une part par le piston principal, d'autre part par le piston de fixation. Ainsi, on peut prévoir le piston de fixation sans pour autant nécessiter une structure complexe du dispositif d'entraînement. En particulier, il n'est pas nécessaire de prévoir quatre chambres distinctes pour la commande du piston principal et celle du piston de fixation, puisque l'on utilise une chambre hydraulique commune pour la manoeuvre du piston principal et du piston de fixation.
- Le piston de fixation est traversé par la tige principale.
- Les moyens de commande des moyens de couplage comprennent un piston de couplage relié à une tige de couplage, et le dispositif d'entraînement est configuré pour que les piston principal, le piston de fixation et le piston de couplage puissent être commandés par une centrale de commande au moyen de trois connexions hydrauliques à la centrale, à savoir : une première connexion entre la centrale et la chambre hydraulique délimitée par le piston principal et le piston de fixation, une deuxième connexion entre la centrale et une chambre hydraulique délimitée par le piston principal et le cylindre, et une troisième connexion entre la centrale et un canal reliant à la fois une chambre hydraulique délimitée par le piston de fixation et le cylindre et une chambre hydraulique délimitée par le piston de couplage et le cylindre. Ce mode de réalisation est particulièrement intéressant : seules trois connexions à la centrale de commande sont utilisées pour commander le déplacement de trois pistons distincts, là où l'on aurait pu utiliser six connexions, à savoir deux par piston. Le dispositif proposé est donc particulièrement compact et ne nécessite pas de connexion lourde et compliquée.
- Un moyen de rappel est disposé autour de la tige principale, sous la tête du piston principal. Ce moyen de rappel peut prendre la forme d'une rondelle élastique. II permet de décoller la tête du piston principal et de permettre l'injection de fluide hydraulique, évitant ainsi tout risque de blocage.
- La valve peut être verrouillée en position fermée, et les moyens de commande des moyens de couplage commandent en outre des moyens de déverrouillage de la valve. Ainsi, en verrouillant la valve, on garantit qu'elle ne risque pas de s'ouvrir au cours du déplacement de la poche de coulée. En outre, les mêmes moyens de commande peuvent à la fois commander les moyens de couplage et les moyens de déverrouillage de la valve.

L'invention a également pour objet l'ensemble d'un dispositif d'entraînement tel que décrit ci-dessus et d'une valve de régulation, comprenant en outre un élément de guidage, comportant un logement de réception d'une partie du dispositif d'entraînement, un logement de réception d'une partie de la valve, et des moyens de guidage des moyens de couplage au cours de leur déplacement.

L'invention a par ailleurs pour objet un dispositif de montage et de démontage d'un dispositif d'entraînement tel que décrit ci-dessus sur une valve de régulation et/ou sur une poche de coulée, agencé pour assurer le montage et le démontage automatiques du dispositif d'entraînement.

L'invention sera mieux comprise à la lecture de la description qui va suivre, donnée uniquement à titre d'exemple et faite en se référant aux dessins dans lesquels :
- les figures 1a et 1b sont des vues en coupe d'un dispositif d'entraînement selon un mode de réalisation, comportant des moyens de couplage respectivement en position désactivée et en position activée ;
- les figures 2a à 2f sont des vues en coupe schématiques illustrant les étapes de fonctionnement d'un dispositif d'entraînement similaire à celui des figures 1a et 1b ;
- la figure 3 et une vue en coupe en perspective de l'extrémité d'une tige principale d'un dispositif d'entraînement similaire à celui des figures 1a et 1b ;
- les figures 4a et 4b sont des vues en coupe schématique d'un dispositif d'entraînement similaire à celui des figures 1a et 1b, assemblé sur un élément de guidage ; et
- la figure 5 est une vue en coupe partielle d'un dispositif d'entraînement similaire à celui des figures 1a et 1b, illustrant les connexions hydrauliques de ce dispositif.

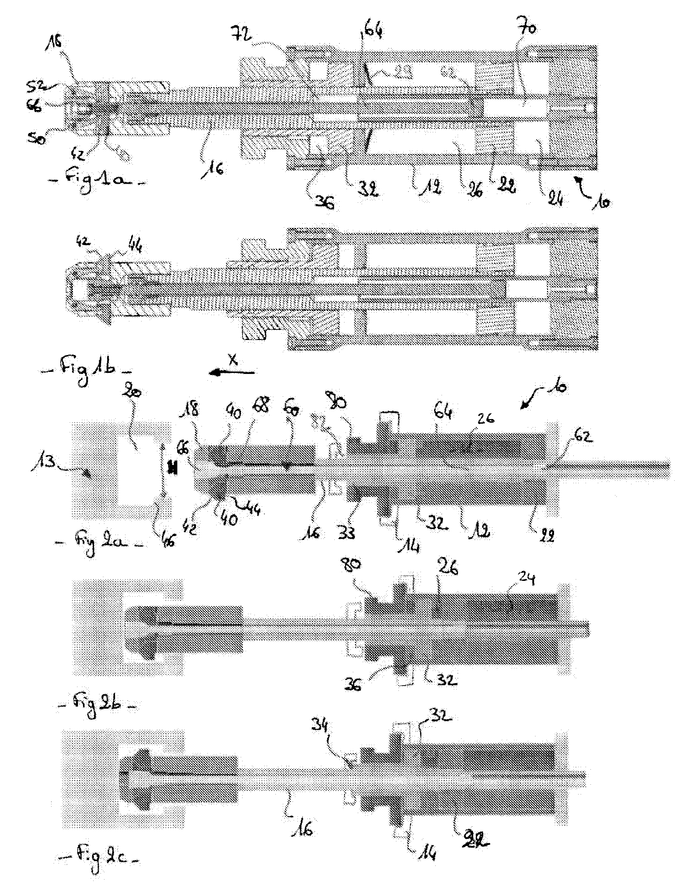

Une installation de coulée comprend généralement un répartiteur, permettant de répartir du métal liquide vers des moules de coulée. Ce répartiteur est alimenté en métal liquide grâce à des poches de coulée, déplaçables au-dessus du répartiteur pour assurer ce transfert. Chaque poche de coulée est munie d'une valve de régulation de la coulée, composée souvent d'une valve linéaire, appelée "valve à tiroirs". L'ouverture ou la fermeture de cette valve de régulation est commandée par un dispositif d'entraînement 10, représenté notamment sur les figures 1a et 2a. Généralement, ce dispositif d'entraînement comprend un cylindre ou enveloppe 12, destiné à être reçu au moins partiellement dans un logement 14 solidaire de la valve, monté fixe dans ce logement 14. Ce logement 14 peut être directement ménagé sur la valve de régulation, ou bien sur la poche de coulée sur laquelle est montée la valve de régulation. Par ailleurs, le dispositif d'entraînement 10 comprend une tige principale 16 de commande de l'ouverture et de la fermeture de la valve, montée coulissante dans le cylindre 12, et dont l'extrémité 18 est destinée à être reçue dans un logement 20 de la valve pour être couplée à cette dernière. Plus précisément, le logement 20 de la valve est ménagé sur une partie mobile 13 de la valve. Dans le cas d'une valve à tiroirs munie de deux plaques superposées coulissantes l'une par rapport à l'autre, le logement 20 est ménagé sur la partie 13 de la valve recevant la plaque mobile, le déplacement de l'extrémité 18 une fois couplée au logement 20 permettant de déplacer cette plaque entre une position fermée et une position ouverte de la valve.

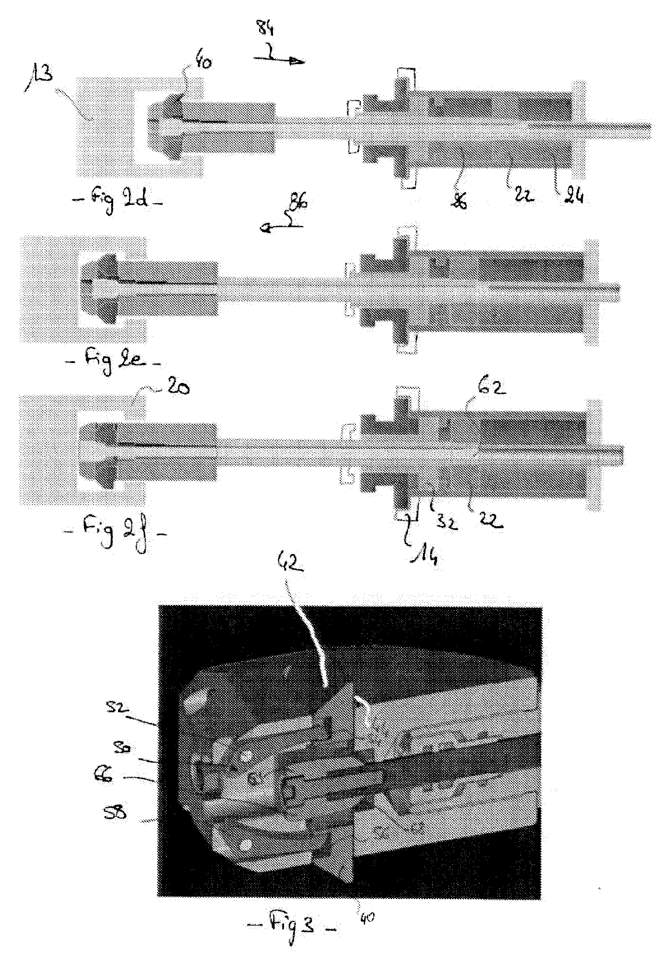

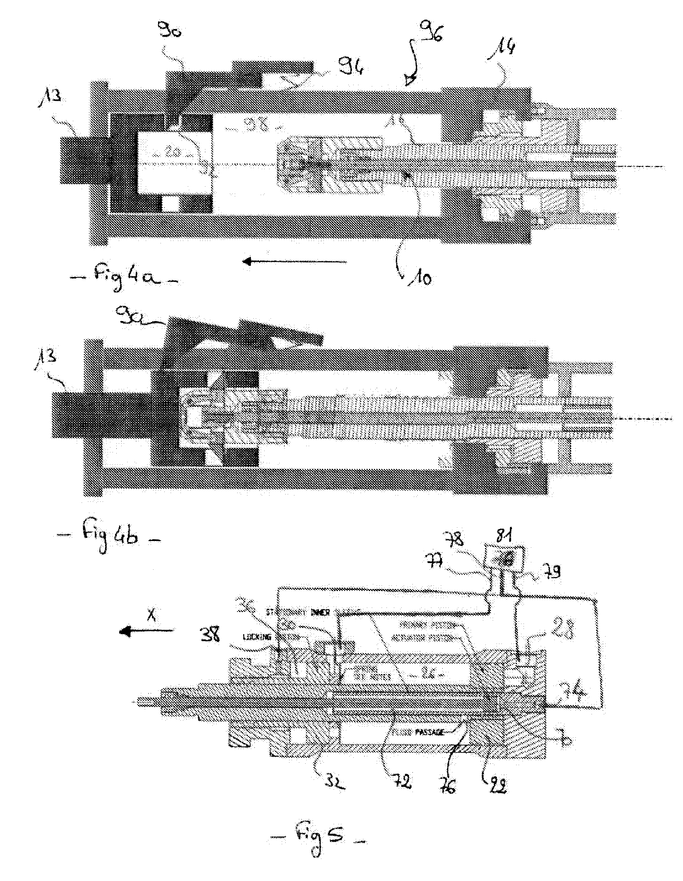

Le dispositif d'entraînement 10 est muni d'un premier piston 22, appelé piston principal, monté coulissant dans le cylindre 12 et relié à la tige principale 16 de telle sorte que tout déplacement du piston 22 est transmis à cette tige principale 16. Le déplacement de ce piston 22, donc de la tige principale 16, permet d'ouvrir ou de fermer la valve de régulation. Comme on peut le voir sur la figure 1a, ou encore sur la figure 2d, le piston principal 22 délimite, avec l'intérieur du cylindre 12, une première 24 et une deuxième 26 chambres hydrauliques principales. La première chambre principale 24 est alimentée en fluide par un canal d'alimentation 28, et la deuxième chambre principale 26 est alimentée en fluide par un canal d'alimentation 30, comme représenté sur la figure 5. Comme on peut le voir sur la figure 1a, un moyen de rappel 29 est disposé autour de la tige principale 16, sous la tête du piston principal 22. Ce moyen de rappel est, par exemple, une rondelle élastique. Elle permet de décoller la tête du piston 22 et de permettre l'injection de fluide hydraulique dans la chambre 26, même lorsque le piston 22 est en fin de course.

Par ailleurs, pour assurer la fixation du cylindre 12 dans le logement 14, solidaire de la valve, le dispositif d'entraînement 10 comporte un second piston 32, appelé piston de fixation. Ce piston 32 est agencé pour appuyer sur une paroi 34 du logement 14, comme on peut le voir sur la figure 2c, de façon à verrouiller par serrage le cylindre 12 par rapport au logement 14. Plus précisément, le second piston 32 comprend une jupe 33, destinée à former une cale entre le cylindre 12 et la paroi 34 du logement 14. Le piston de fixation 32 et la paroi 34 du logement 14 sont traversés par la tige principale 16, de façon à laisser cette tige 16 coulisser sous l'effet du déplacement du piston 22. Comme on peut le voir notamment sur la figure 2b, le piston 32 délimite, avec le cylindre 12, d'une part la seconde chambre hydraulique principale 26, d'autre part une troisième chambre hydraulique 36, disposée dans la partie avant du cylindre (la direction avant étant indiquée par la flèche X sur la figure 2a). Ainsi, la seconde chambre hydraulique 26 est délimitée, d'une part, par le piston principal 22, d'autre part par le piston de fixation 32. On utilise donc une chambre commune pour agir sur les deux pistons, d'où un gain de place. La troisième chambre hydraulique 36 est alimentée en fluide par un canal d'alimentation 38, représenté sur la figure 5.

Le dispositif d'entraînement 10 comporte par ailleurs des moyens 40 de couplage de la tige principale 16 à une partie mobile 13 de la valve de régulation, plus précisément de couplage de l'extrémité 18 de la tige 16 avec le logement 20 de la valve. Dans cet exemple, les moyens de couplage comprennent deux plots, rapportés sur la tige principale 16, montés mobiles par rapport à la tige 16 entre une position activée, représentée notamment sur la figure 2d, dans laquelle les plots s'étendent transversalement à la tige principale 16 en faisant saillie de cette tige de façon à pouvoir coupler la tige principale 16 et la valve 13, et une position désactivée, représentée notamment sur la figure 2a, dans laquelle les plots sont au moins partiellement rétractés dans la tige principale 16, de façon à pouvoir découpler la tige principale 16 et la valve 13. Plus précisément, lorsqu'ils sont en position désactivée, le diamètre maximal de l'extrémité 18 de la tige 16 est inférieur à la hauteur H d'une ouverture du logement 20, comme on peut le voir sur la figure 2a. Ainsi, en position désactivée des plots, l'extrémité 18 peut passer à l'intérieur du logement 20, depuis la position illustrée sur la figure 2a jusqu'à la position illustrée sur la figure 2b. Pour faciliter ce passage de l'extrémité 18 à l'intérieur du logement 20, c'est-à-dire pour inciter les plots à prendre leur position désactivée, on peut prévoir une surface chanfreinée 42 à l'avant des plots. Par ailleurs, les plots comportent chacun une surface de butée 44, agencée pour retenir l'extrémité 18 de la tige 16 dans le logement 20 lorsque les plots sont en position activée. Cette surface de butée 44 coopère avec une surface de butée 46 prévue dans le logement 20.

L'extrémité 18 comporte en outre des moyens 50 de rappel des moyens de couplage 40 en position désactivée, visibles en particulier sur les figures 1a, 1b et sur la figure 3. Ces moyens 50 comprennent deux bras montés chacun pivotants autour d'un axe 52, comprenant chacun une extrémité 54 de coopération avec les plots, coopérant avec un évidement 56 réalisé dans la paroi avant des plots, et une extrémité d'activation 58 décrite plus précisément dans la suite.

Le dispositif d'entraînement 10 comporte en outre des moyens 60 de commande des moyens de couplage 40, aptes à les activer et désactiver. Ces moyens 60 comprennent un piston de couplage 62, relié à une tige de couplage 64 dont l'extrémité 66, opposée au piston 62, est apte à activer et désactiver les moyens de couplage 40, par coulissement. Plus précisément, l'extrémité 66 de la tige 64 est évasée. Elle présente une surface arrière 68, pouvant former une rampe avec les plots de façon à les faire passer dans leur position activée ou désactivée lors du coulissement de la tige 64, comme cela est décrit dans la suite. Par ailleurs, l'extrémité 66 présente une partie avant 69 comprenant une surface, sensiblement plate, configurée pour venir en appui contre le fond du logement 20. Par ailleurs, la partie avant 69 est agencée pour coopérer avec l'extrémité 58 des bras, de façon à rappeler les moyens de couplage 40 en position désactivée, comme cela est décrit dans la suite.

La tige de couplage 64 et le piston de couplage 62 sont montés coulissants à l'intérieur de la tige principale 16 du dispositif 10. Plus précisément, comme on peut le voir sur la figure 1a, le piston 62 délimite, avec la tige principale 16, une quatrième 70 et une cinquième 72 chambres hydrauliques, permettant de déplacer le piston 62 à l'intérieur de la tige principale 16 sous l'action d'un fluide. La chambre hydraulique arrière 70 est alimentée en fluide grâce à un canal 74, représenté sur la figure 5. Par ailleurs, la chambre hydraulique avant 72 est alimentée en fluide grâce à un passage 76 communiquant avec la deuxième chambre hydraulique principale 26. Ainsi, de même que la chambre 26, c'est par le canal 30 que la chambre avant 72 est alimentée en fluide.

Les connexions hydrauliques du dispositif d'entraînement 10 à une centrale de commande 81 vont à présent être décrites. Le dispositif 10 est configuré pour que les piston principal 22, le piston de fixation 32 et le piston de couplage 62 puissent être commandés par la centrale de commande 81 au moyen de trois connexions hydrauliques 77, 78, 79, à savoir :
- une première connexion 77 entre la centrale 81 et la chambre hydraulique 26 délimitée par le piston principal 22 et le piston de fixation 32,
- une deuxième connexion 79 entre la centrale 81 et la chambre hydraulique 24 délimitée par le piston principal 22 et le cylindre 12, et
- une troisième connexion 78 entre la centrale 81 et un canal reliant à la fois la chambre hydraulique 36 délimitée par le piston de fixation 32 et le cylindre 12, et la chambre hydraulique 70 délimitée par le piston de couplage 62 et le cylindre 12. On notera donc que les canaux d'alimentation 74 et 38 sont reliés l'un à l'autre.

Le montage du dispositif d'entraînement 10 sur une poche de coulée va à présent être décrit, en référence aux figures 2a à 2f.

Généralement, on installe le dispositif d'entraînement 10 sur une poche de coulée au moment où cette poche de coulée est dans une position intermédiaire, position par exemple pendant laquelle une autre poche de coulée est en train d'être vidée dans le répartiteur. Lorsque la poche de coulée arrive dans cette position intermédiaire, elle est remplie de métal liquide et la valve de régulation est fermée. On vient alors rapporter le dispositif d'entraînement 10 sous la poche, au voisinage immédiat ou très proche de la valve. Le montage du dispositif 10 commence par l'introduction du cylindre 12, ou du moins d'une partie avant 80 du cylindre 12, dans le logement 14, dans la configuration illustrée sur la figure 2a. Dans cette configuration, le piston de fixation 32 est en position rentrée dans le cylindre 12, c'est-à-dire que la chambre 36 a un volume sensiblement maximal. Ainsi, le piston 32 et la jupe 33 ne font pas, ou que très peu, saillie du cylindre 12, si bien que la longueur du cylindre 12 est relativement faible. II en résulte que l'on peut facilement insérer la partie 80 du cylindre 12 dans le logement 14, grâce à un jeu 82. Au moment de cette insertion du cylindre 12 dans le logement 14, les alimentations des chambres hydrauliques 24, 26, 36, 70, 72 sont en position neutre, c'est-à-dire que les pistons 22, 32 et 62 sont immobiles. Dans cette configuration, le piston principal 22 (donc la tige principale 16), de même que le piston de fixation 32, est en position rentrée à l'intérieur du cylindre 12, d'où une certaine compacité du dispositif 10 au moment de la fixation du cylindre 12 sur la valve. Le piston de couplage 62 et la tige de couplage 64 sont quant à eux en position sortie, l'extrémité évasée 66 arrivant sensiblement à affleurement avec l'extrémité 18 de la tige principale 16, et les moyens de couplage 40 étant en position désactivée, comme illustré sur la figure 1a.

Une fois le cylindre 12 disposé à l'intérieur du logement 14, on injecte du fluide par le canal 28, de façon à déplacer le piston principal 22 vers l'avant X (figure 5). Du fait de ce déplacement, la tige principale 16 se déplace également dans la direction avant, et son extrémité 18 passe à l'intérieur du logement 20, comme illustré sur la figure 2b, jusqu'à ce que l'extrémité 18 arrive en butée dans le fond du logement 20. Une fois l'extrémité 18 en butée dans le logement 20, on injecte du fluide dans la seconde chambre hydraulique 26, par le canal 30, tout en empêchant que du fluide puisse sortir du canal 28. Cette injection de fluide par le canal 30 a deux effets. En effet, l'augmentation de liquide à l'intérieur de la chambre 26 déplace le piston de fixation 32 vers l'avant, afin que la jupe 33 fasse saillie à l'extérieur de la partie 80 du cylindre 12, et vienne en butée contre la paroi 34 du logement 14, ce qui a pour effet de serrer le cylindre dans le logement 14, et donc de le verrouiller. Simultanément (ou peu après, ou encore peu avant), le passage de liquide dans la chambre 26 permet, grâce au passage 76, d'augmenter la quantité de fluide à l'intérieur de la chambre avant 72, et donc de déplacer le piston de couplage 62 vers l'arrière, de façon à faire reculer la tige de couplage 64 par rapport à la tige 16, comme représenté sur la figure 2c. Du fait de ce déplacement de la tige de couplage 64, l'extrémité 66 se rétracte à l'intérieur de l'extrémité 18, ce qui déplace les moyens de couplage 40 depuis leur position désactivée vers leur position activée. En d'autres termes, les plots sortent de l'extrémité 18, par effet de rampe.

Une fois le piston de fixation 32 en position de fixation du cylindre dans le logement 14, et la tige de couplage 64 en position rentrée dans la tige 16, afin d'activer les plots, on débloque le canal 28, tout en continuant à injecter du fluide dans le canal 30. II en résulte que le piston principal 22 se déplace vers l'arrière, de façon à faire reculer légèrement l'extrémité 18 de la tige principale 16. II en résulte que les parois 44 des plots viennent en butée contre les parois 46 du logement 20. Dans cette position, la valve et le dispositif d'entraînement 10 sont couplés. On peut donc ouvrir ou fermer la valve, par déplacement du piston principal 22 dans le cylindre 12, grâce à l'injection de fluide par le canal 30 ou par le canal 28. Ainsi, dans la configuration illustrée sur la figure 2d, lorsque le piston principal 22 recule conformément à la flèche 84, il entraîne la valve, plus précisément, l'une des plaques de cette valve, afin d'ouvrir la valve. Dans la configuration illustrée sur la figure 2e, lorsque le piston 22 est déplacé vers l'avant, conformément à la flèche 86, il ferme la valve.

Lorsque l'on souhaite démonter le dispositif d'entraînement 10 de la poche de coulée, on procède de la façon suivante. On ferme tout d'abord la valve, en disposant le piston 22 comme représenté sur la figure 2f. On injecte par la suite du fluide dans les canaux 38 et 74, ce qui a pour double effet de déplacer le piston 32 vers l'arrière, donc de déverrouiller le cylindre 12 par rapport au logement 14, et de déplacer le piston 62 vers l'avant, donc de remettre les moyens de blocage 40 en position désactivée. On notera que lorsque l'extrémité 66 avance vers l'avant, elle coopère avec l'extrémité 58 des bras, ce qui fait pivoter leur extrémité 54 vers le centre et rappelle donc les plots en position désactivée. Dans cette position désactivée des plots, on peut retirer l'extrémité 18 du logement 20, éventuellement en ayant précédemment déplacé le piston 22 vers l'arrière, puis démonter facilement le dispositif d'entraînement du logement 14.

Selon un mode de réalisation avantageux, illustré sur les figures 4a et 4b, la valve peut être verrouillée en position fermée, ce qui évite les risques d'ouverture accidentelle au cours de son déplacement. A cet effet, on prévoit des moyens de verrouillage et de déverrouillage 90, 92 comprenant un loquet coopérant avec une fente prévue sur la valve, dans le logement 20. Ce loquet est rappelé en position verrouillée grâce à un ressort 94. Le loquet est porté, dans cet exemple, par un élément de guidage 96, monté fixe par rapport à la poche de coulée et par rapport à la partie fixe de la valve de régulation, formant une sorte d'extension de la valve. Cet élément 96 porte un logement 14 pour le cylindre, similaire à celui décrit précédemment, et comporte en outre un rail 98 de guidage de la partie mobile 13 de la valve, dans lequel le logement 20 de la partie mobile 13 peut coulisser.

Il se trouve que les moyens 62, 64 de commande des moyens de couplage 40 commandent avantageusement les moyens de déverrouillage 90, 92. En effet, avant que le couplage entre le dispositif 10 et la valve 13 ne soit mis en oeuvre, cette dernière est en position verrouillée, illustrée sur la figure 4a. Puis, une fois le cylindre introduit dans le logement 14 et la tige principale 16 à l'intérieur du logement 20, le déplacement des plots, sous l'effet du coulissement du piston de couplage 62, génère un déplacement des moyens de verrouillage 90, de leur position verrouillée à leur position déverrouillée, illustrée sur la figure 4b. Plus précisément, la surface de chanfreinée 42 coopère avec une surface chanfreinée du loquet 92 pour le déplacer vers le haut afin de le faire sortir de la fente 92 et ainsi déverrouiller la valve 13. Par ailleurs lors du démontage du dispositif 10, de façon avantageuse également, lorsque les plots passent en position désactivée et que la valve est fermée, le loquet se place à nouveau dans la fente, sous l'effet des moyens 94, ce qui verrouille la valve en position fermée.

On comprend que le procédé décrit ci-dessus peut facilement être automatisé. Ainsi, on peut prévoir un robot de montage et de démontage du dispositif 10, agencé pour assurer le montage et le démontage automatiques du dispositif 10.

On notera que l'invention n'est pas limitée au mode de réalisation précédemment décrit.

Parmi les variantes du dispositif d'entraînement, on notera que les moyens 50 de rappel des moyens de couplage en position désactivée peuvent, non pas être actionnés par la tige de couplage 64, mais comprendre des ressorts, par exemple agissant sur les plots pour qu'ils reprennent leur position désactivée.

L'homme du métier pourra aisément transposer cet enseignement à tout dispositif utilisé dans la coulée continue d'un métal actionné par un vérin devant être rapporté au moment de son utilisation, comme par exemple un dispositif de changement de tube de coulée, un tirroir de répartiteur, un dispositif de commande d'une quenouille, etc.

## Revendications

1. Dispositif d'entraînement (10) d'une valve de régulation pour la coulée de métal liquide, comprenant une tige principale (16) de commande de l'ouverture et de la fermeture de la valve, et des moyens (40) de couplage de la tige principale (16) à la valve, **caractérisé en ce qu'**il comporte en outre des moyens de commande des moyens de couplage (40), aptes à activer et désactiver les moyens de couplage.

2. Dispositif selon la revendication précédente, dans lequel les moyens de commande des moyens de couplage comprennent un piston de couplage (62) relié à une tige de couplage (64), l'extrémité (66) de la tige de couplage étant apte à activer et désactiver les moyens de couplage (40) par coulissement du piston et de la tige de couplage.

3. Dispositif selon la revendication précédente, dans lequel la tige de couplage (64) est montée coulissante à l'intérieur de la tige principale (16).

4. Dispositif selon l'une quelconque des revendications précédentes, dans lequel les moyens de couplage (40) comprennent au moins un plot rapporté sur la tige principale (16), monté mobile par rapport à la tige principale entre
- une position activée, dans laquelle le plot s'étend transversalement à la tige principale (16) en faisant saillie de cette tige de façon à pouvoir coupler la tige principale et la valve, et
- une position désactivée, dans laquelle le plot est au moins partiellement rétracté dans la tige principale (16), de façon à pouvoir découpler la tige principale et la valve.

5. Dispositif selon la revendication précédente, dans lequel l'extrémité (66) de la tige principale est destinée à être reçue dans un logement (20) de la valve, le plot comprenant une surface de butée (44) agencée pour retenir cette extrémité dans le logement (20) lorsque le plot est en position activée.

6. Dispositif selon l'une quelconque des revendications précédentes, comprenant en outre des moyens (50) de rappel des moyens de couplage (40) dans leur configuration désactivée.

7. Dispositif selon l'une quelconque des revendications précédentes, comprenant un cylindre (12) destiné à être reçu au moins partiellement dans un logement (14) solidaire de la valve, le dispositif comprenant un piston (22) dit piston principal relié à la tige principale (16), et comportant un autre piston (32), dit piston de fixation, agencé pour assurer la fixation du cylindre (12) relativement au logement (14).

8. Dispositif selon la revendication précédente, comprenant une chambre hydraulique (26) délimitée, d'une part par le piston principal (22), d'autre part par le piston de fixation (32).

9. Dispositif selon l'une quelconque des revendications 7 à 8, dans lequel le piston de fixation (32) est traversé par la tige principale (16).

10. Dispositif selon la revendication précédente, dans lequel les moyens de commande des moyens de couplage comprennent un piston de couplage (62) relié à une tige de couplage (64), et le dispositif d'entraînement (10) est configuré pour que les piston principal (22), le piston de fixation (32) et le piston de couplage (62) puissent être commandés par une centrale de commande (81) au moyen de trois connexions hydrauliques (77, 78, 79), à savoir :
- une première connexion (77) entre la centrale et la chambre hydraulique (26) délimitée par le piston principal et le piston de fixation,
- une deuxième connexion (79) entre la centrale et une chambre hydraulique (24) délimitée par le piston principal et le cylindre, et
- une troisième connexion (78) entre la centrale et un canal reliant à la fois une chambre hydraulique (36) délimitée par le piston de fixation et le cylindre et une chambre hydraulique (70) délimitée par le piston de couplage et le cylindre.

11. Dispositif selon l'une quelconque des revendications précédentes, dans lequel, la valve pouvant être verrouillée en position fermée, les moyens (62, 64) de commande des moyens de couplage (40) commandant en outre des moyens (90) de déverrouillage de la valve.

12. Ensemble d'un dispositif selon l'une quelconque des revendications précédentes et d'une valve de régulation, comprenant en outre un élément de guidage (96), comportant un logement (14) de réception d'une partie du dispositif d'entraînement, un logement de réception d'une partie de la valve (13), et des moyens (98) de guidage des moyens de couplage au cours de leur déplacement.

13. Dispositif de montage et de démontage d'un dispositif d'entraînement (10) selon l'une quelconque des revendications précédentes sur une valve de régulation et/ou sur une poche de coulée, agencé pour assurer le montage et le démontage automatiques du dispositif d'entraînement.
